# EUROPÄISCHE PATENTSCHRIFT

(11) **EP 1 884 664 B1**
(45) Veröffentlichungstag und Bekanntmachung des Hinweises auf die Patenterteilung: **19.12.2012**
(21) Anmeldenummer: 07012696.6
(22) Anmeldetag: 28.06.2007
(51) Int. Cl.: F04C 15/00

(54) **Pumpe und Motor gekoppelt durch eine Schraubenfeder**
Pump and motor connected by a coil spring
Pompe et moteur accouplés par un ressort hélicoidal

(30) Priorität: 25.07.2006 DE 102006034856
(43) Veröffentlichungstag der Anmeldung: 06.02.2008
(73) Patentinhaber: Rogg, Werner, 78056 Villingen-Schwenningen (DE)
(72) Erfinder: Rogg, Werner, 78056 Villingen-Schwenningen (DE)
(74) Vertreter: Modrow, Stephanie

(56) Entgegenhaltungen:
- DE-A1- 3 005 656
- DE-A1- 3 332 888
- DE-A1- 3 444 859
- GB-A- 2 069 609
- GB-A- 2 259 333
- JP-A- 11 101 255
- JP-A- 2004 340 350
- US-A- 4 780 070
- DISBORG L ET AL: "ENTWICKLUNG DER WELLE-NABE-VERBINDUNGEN" ANTRIEBSTECHNIK, VEREINIGTE FACHVERLAGE, MAINZ, DE, Bd. 29, Nr. 2, 1. Februar 1990 (1990-02-01), Seiten 26,28-29, XP000164861 ISSN: 0722-8546

## Beschreibung

Die Erfindung betrifft eine Pumpe gemäß dem Oberbegriff des Patentanspruchs 1. Eine solche Pumpe ist in JP 11-101255 offenbart, die als nächstliegender Stand der Technik angesehen wird.

Bekannt sind Pumpen zur Förderung von Flüssigkeiten mit einem geschlossenen Volumen, welches einen Einlass und einen Auslass aufweist, wobei in dem geschlossenen Volumen eine Fördermechanik angeordnet ist. Weiterhin sind Pumpen zur Förderung von Flüssigkeiten bekannt, welche eine Pumpenwelle aufweisen, über welche die Pumpe antreibbar ist. Insbesondere sind derartige Pumpen bekannt, welche über eine Motorwelle eines Motors antreibbar sind. Pumpen dieser Art werden insbesondere in Wartungssystemen zur Wartung von Fahrzeugen verwendet, in welchen mit ihnen Flüssigkeiten wie insbesondere Bremsflüssigkeit in den entsprechenden Behälter des Fahrzeugs gefördert wird. Dabei soll insbesondere erreicht werden, dass in kurzer Zeit der Behälter mit Flüssigkeit gefüllt werden kann.

Eine vorteilhafte Weiterbildung sieht vor daher , eine Pumpe derart auszubilden, dass das Auftreten von Kavitationen verringert oder vermieden wird.

Die bekannten Pumpen werden in der Regel derart betrieben, dass ihre Pumpenwelle im Betriebszustand horizontal verläuft. Die Pumpenwelle ist gegenüber dem Pumpengehäuse zwar mit einer Dichtung abgedichtet, diese kann jedoch während des Betriebs anfangen zu lecken.

Eine weitere vorteilhafte Weiterbildung sieht daher vor, die Pumpe derart auszubilden, dass ein Lecken der Pumpe, insbesondere über die Pumpenwelle, vermieden wird.

Wird die Pumpe über einen Motor angetrieben, sind bei bekannten Pumpen die Pumpenwelle und die Motorwelle starr miteinander verbunden. Montageungenauigkeiten in der relativen Anordnung zwischen Pumpe und Motor können dabei nicht ausgeglichen werden, so dass die Gefahr besteht, dass das Drehmoment des Motors nicht optimal auf die Pumpe übertragen wird. Zudem besteht die Gefahr eines Verkantens. Bei einer fixen Verbindung zwischen den beiden Wellen besteht zudem die Gefahr, dass, falls die Pumpe blockieren sollte, der Motor jedoch trotzdem weiterläuft, die Pumpe beschädigt wird.

Die Aufgabe der Erfindung besteht daher darin, die Pumpe derart weiterzubilden, dass die Kopplung zwischen Pumpe und Motor verbessert wird und die vorgenannten Nachteile vermieden werden.

Die Aufgabe der Erfindung wird gelöst durch eine Pumpe mit den Merkmalen des Patentanspruchs 1.

Bewegt sich die Fördermechanik in der Flüssigkeit, tritt Kavitation auf. Kavitation ist die Bildung und Auflösung von Hohlräumen in Flüssigkeiten durch Druckschwankungen. Ursache der Kavitation insbesondere bei Pumpen sind die örtlichen Druckabsenkungen im Bereich der bewegten Elemente der Fördermechanik, beispielsweise der Zahnräder einer Zahnradpumpe. Derartige Druckabsenkungen sind jedoch unvermeidlich mit der Umströmung der Kanten der bewegten Elemente verbunden. Der Druck in einer Flüssigkeit ist umso geringer, je höher die Geschwindigkeit ist. Falls die Geschwindigkeit so hoch ist, dass der statische Druck unter den Verdampfungsdruck der Flüssigkeit fällt, bilden sich Dampf- oder Gasblasen. Insbesondere in Bremsflüssigkeiten oder Hydraulikölen, welche aus mehreren Komponenten besteht, können sich aufgrund der unterschiedlichen Siedetemperaturen der Komponenten bei der Förderung der Flüssigkeit Gasblasen bilden. Diese Gasblasen sind jedoch unerwünscht, da sie zum einen den Wirkungsgrad reduzieren und zum anderen zu Beschädigungen der Fördermechanik führen. Insbesondere bei Bremsflüssigkeit, welche in Fahrzeugen, insbesondere Kraftfahrzeugen, verwendet wird, können Gasblasen in der Bremsflüssigkeit zu einem Versagen der Bremsen und somit zu großen Gefahren führen.

Eine vorteilhafte Weiterbildung sieht daher vor, eine Pumpe derart auszubilden, dass das Auftreten von Kavitationen verringert oder vermieden wird.

Bei bekannten Pumpen liegt der erzeugte Druck oft deutlich über dem Druck, mit dem die Flüssigkeit in den Behälter gepumpt werden kann. Es ist somit weiterhin vorteilhaft, die Pumpe mit einem Ventil auszustaffen, mit welchem der Druck verringert wird und welches weiterhin geeignet ist, dafür zu sorgen, dass möglichst blasenfreie Flüssigkeit in den Behälter gefördert wird.

Vorteilhafte Weiterbildungen und Ausgestaltungen der Erfindung sind in den Unteransprüchen angegeben.

Erfindungsgemäß werden eine Pumpe mit einer Pumpenwelle und ein Motor mit seiner Motorwelle, welcher die Pumpe antreibt, nicht starr miteinander verbunden oder gar einstückig ausgeführt, sondern die freien Enden der Motorwelle und der Pumpenwelle sind axial zueinander beabstandet und über eine Schraubenfeder miteinander verbunden. Die Schraubenfeder steht dabei im Wesentlichen mit ihrem einen Ende mit dem freien Ende der Motorwelle und mit ihrem anderen Ende mit dem freien Ende der Pumpenwelle in Eingriff. Dreht sich die Motorwelle, wird, ggf. nach entsprechender Torsion der Schraubenfeder, auch die Pumpenwelle angetrieben. Die Schraubenfeder kann dabei jedoch Versätze zwischen der Achse der Motorwelle und der Achse der Pumpenwelle sowie ggf. sogar Neigungen der beiden Achsen gegeneinander ausgleichen. Zudem stellt die Schraubenfeder eine Sollbruchstelle dar, welche bei einer Blockade der Pumpe undeinem Weiterlaufen des Motors verhindert, dass die Pumpe beschädigt wird.

Die drehfeste Verbindung zwischen den jeweiligen Schraubenende und den entsprechenden freien Ende der jeweiligen Welle wird erfindungsgemäß dadurch erreicht, dass die freien Enden der Pumpenwelle und der Motorwelle zumindest an einer Seite abgeflacht sind und zumindest die erste und die letzte Windung der Schraubenfeder entsprechend abgeflacht ist. Somit kann sich die entsprechende Windung der Schraubenfeder nicht gegenüber dem freien Ende der Pumpenwelle und der Motorwelle verdrehen, so dass eine Übertragung des Drehmoments möglich wird. Dabei lässt sich die Schraubenfeder jedoch einfach durch Überstreifen auf das freie Ende der jeweiligen Welle drehfest mit ihr verbinden, ohne dass ein Lötvorgang oder ein anderer Befestigungsvorgang nötig ist.

Die Pumpe zur Förderung von Flüssigkeiten ist vorzugsweise derart ausgebildet, dass an dem Auslass der Pumpe ein strömungsabhängiger Widerstand angeordnet ist. Dieser Widerstand setzt sich der Strömung der Flüssigkeit entgegen. Es wird dadurch ein Gegendruck aufgebaut, welcher den Druck innerhalb des Pumpvolumens erhöht. Aufgrund des höheren Drucks steigen wiederum die entsprechenden Siedetemperaturen der Flüssigkeit oder der Komponenten der Flüssigkeit, so dass eine Kavitation unterdrückt oder ganz vermieden wird. Der Widerstand ist so ausgebildet, dass er strömungsabhängig ist, so dass bei größerer Strömung auch ein höherer Gegendruck erzeugt wird, so dass zuverlässig bei jeder Fördergeschwindigkeit der entsprechende Gegendruck aufgebaut wird, der dafür sorgt, dass Gasausfälle vermieden werden.

Vorzugsweise ist der Widerstand durch ein mit einem Federelement belastetes Verschlusselement gebildet, wobei das Verschlusselement in einer Ruheposition den Auslass abdeckt und in Abhängigkeit von der Strömung aus der Ruheposition gegen die Federkraft auslenkbar ist. Steht die Pumpe still, liegt das Verschlusselement an dem Auslass an. Fließt die Flüssigkeit durch die Pumpe mit geringer Geschwindigkeit, wird das federbelastete Verschlusselement nur wenig ausgelenkt, wodurch ein vergleichsweise kleiner Querschnitt erzeugt wird, durch welchen die Flüssigkeit zwischen dem Auslass und dem Verschlusselement aus der Pumpe ausströmen kann. Fließt jedoch die Flüssigkeit durch die Pumpe mit höherer Geschwindigkeit, wird das Verschlusselement gegen die Federkraft weiter ausgelenkt, so dass ein größerer Strömungsquerschnitt erzeugt wird, über welchen die Flüssigkeit abfließen kann, wobei jedoch weiterhin durch die Feder ein Gegendruck erzeugt wird, der das Auftreten von Kavitationen im Volumen der Pumpe verhindert.

Das Verschlusselement kann das Kegel oder Scheibe ausgebildet sein, ist jedoch besonders bevorzugt als Kugel ausgebildet, da diese die Auslassöffnung zuverlässig abdecken kann.

Dabei ist besonders bevorzugt das Verschlusselement als Kugel mit einem Durchmesser ausgebildet, welcher etwa um ein Drittel seines Durchmessers größer ist als der Durchmesser des Auslasses. Bei diesem Verhältnis wurde durch Versuche festgestellt, dass die Kavitation zuverlässig vermieden werden kann.

Das Federelement ist besonders bevorzugt als Schraubenfeder ausgebildet, da diese sich mit ihrem einen Ende an dem Verschlusselement, welches insbesondere als Kugel ausgebildet ist, besonders gut anlegen kann. Weiterhin sind Schraubenfedern einfach und kostengünstig zu fertigen und in den gewünschten Härten vorhanden.

Bei einer vorteilhaften Weiterbildung ist die Schraubenfeder in einem Hohlzylinder angeordnet, welcher einen innenliegenden Vorsprung aufweist, an welchem sich die Schraubenfeder abstützt. Die Schraubenfeder wird somit zwischen dem innenliegenden Vorsprung des Hohlzylinders und dem Verschlusselement angeordnet, so dass die Federkraft zunimmt, je mehr das Verschlusselement von dem Auslass durch die Strömung weggedrückt und die Feder zusammengedrückt wird. Dadurch kann ein höherer Gegendruck erzeugt werden, je höher die Strömungsgeschwindigkeit und damit die Auslenkung des Verschlusselements aus der Ruheposition ist.

Der Hohlzylinder weist vorteilhafterweise eine Schlauchtülle auf, über welche ein Schlauch an die Pumpe angeschlossen werden kann, um die Flüssigkeit von der Pumpe zu dem gewünschten zu füllenden Behälter geführt werden kann.

Der Hohlzylinder ist vorteilhafterweise über ein an seinem Außenumfang angeordnetes Gewinde an der Pumpe befestigbar, so dass eine einfache und zuverlässige Verbindung zwischen dem den strömungsabhängigen Widerstand aufweisenden Hohlzylinder und der Pumpe hergestellt werden kann.

Vorzugsweise ist die Pumpe, welche über eine Pumpenwelle antreibbar ist, im Betriebszustand derart angeordnet, dass die Pumpenwelle um einen Winkel gegen die Horizontale geneigt ist.

Die Neigung ist dabei derart, dass ein Flüssigkeitstropfen, welcher auf die Pumpenwelle außerhalb des Pumpengehäuses getropft wird, entlang der Pumpenwelle in Richtung auf das Pumpengehäuse aufgrund der Schwerkraft zurückfließt. Diese Anordnung bietet den Vorteil, dass entlang der Pumpenwelle durch die Pumpendichtung austretende Flüssigkeit zurück auf die Pumpendichtung läuft und diese somit elastisch hält. Die Pumpendichtung wird somit weniger schnell spröde und weist eine längere Lebensdauer auf. Zudem wird ein Lecken der Pumpe entlang der Pumpenwelle durch die Pumpendichtung verringert, da austretende Flüssigkeit sich vor der Pumpendichtung sammelt und der Flüssigkeitsfilm das Austreten weiterer Flüssigkeit verhindert. Zudem wird ein Tropfen der Flüssigkeit von der Pumpenwelle vermieden.

Der Winkel, um welchen die Pumpenwelle gegen die Horizontale geneigt ist, sollte so groß sein, dass Flüssigkeit, insbesondere Bremsflüssigkeit, entlang der Pumpenwelle in Richtung auf das Pumpengehäuse zurückläuft. Allerdings sollte andererseits der Winkel möglichst klein gehalten werden, damit die Funktion der Pumpe und des Motors nicht beeinträchtigt wird, Vorzugsweise beträgt der Winkel daher etwa 3° bis 10°, besonders bevorzugt etwa 6°.

Die Pumpenwelle ist in der Regel mit einer Motorwelle verbunden, so dass die Pumpe über den Motor angetrieben werden kann. Bei einer besonders vorteilhaften Weiterbildung sind die Pumpe und der Motor in einem Gehäuse relativ zueinander fixierbar. Bekannte Pumpen und Motoren werden lediglich über die Pumpenwelle und die Motorwelle miteinander verbunden, wobei die Gehäuse so dimensioniert sind, dass die Pumpenwelle und die Motorwelle horizontal liegen. Bei Fixierung von Pumpe und Motor in einem Gehäuse kann erreicht werden, dass auch bei verbundenem Motor und Pumpe die Pumpenwelle gegen die Horizontale geneigt ist.

Vorzugsweise ist dazu das Gehäuse als U-Profil mit einem Bodenbereich und zwei Schenkeln ausgebildet, wobei die Schenkel parallel zueinander um einen Winkel aus ihrer Position senkrecht zum Bodenbereich ausgelenkt sind, wobei der Winkel dem Winkel entspricht, um welchen die Pumpenwelle gegen die Horizontale geneigt ist. Da in der Regel die Gehäuse von Pumpe und Motor als Quader ausgebildet sind, wobei die Pumpenwelle und die Motorwelle senkrecht zu einer Oberfläche des Gehäuses austreten, können somit der Motor und die Pumpe jeweils an einem der Schenkel des Gehäuses derart angeordnet werden, dass sie mit ihrer Frontseite, aus welcher die jeweilige Welle austritt, an dem Schenkel anliegen und die beiden Wellen innerhalb des U-Profils miteinander verbunden werden können.

Vorzugsweise verfügt die Pumpe über ein fluidbetätigtes Ventil, das einen durch eine Druckfeder belasteten Kolben aufweist, welcher in einem Hohlzylinder verschiebbar geführt ist. Der Hohlzylinder weist eine zylindrische Wandung mit einem Innendurchmesser auf, wobei in der Wandung wenigstens eine Austrittsöffnung angeordnet ist, durch welche die in den Innenraum des Hohlzylinders eingetretene Flüssigkeit austreten kann. Weiterhin weist der Hohlzylinder eine Stirnwandung auf, die an einer Stirnseite der zylindrischen Wandung angeordnet ist, wobei die Stirnwandung eine Eingangsöffnung mit einem Innendurchmesser und einer im Wesentlichen zylindrischen Wand aufweist. Durch die Eingangsöffnung kann Flüssigkeit in das fluidbetätigte Ventil eintreten. Dabei ist erfindungsgemäß die Innenseite der Stirnwandung nach Art einer Außenfläche eines Kegelstumpfes ausgebildet. Der Kolben weist einen ersten, vorderen, im Wesentlichen zylindrischen Bereich mit einem Durchmesser auf, der kleiner ist als der Innendurchmesser der Eingangsöffnung. Der erste Bereich des Kolbens kann über die Druckfeder federnd in die Eintrittsöffnung gedrückt werden, so dass dieser erste Bereich des Kolbens die Eintrittsöffnung beinahe vollständig verschließen kann. An den ersten Bereich des Kolbens schließt sich ein zweiter Bereich an, welcher eine unrunde Außenkontur aufweist, deren größter Durchmesser kleiner ist als der Innendurchmesser des Hohlzylinders, aber vorzugsweise diesem fast entspricht. Durch die unrunde Außenkontur wird einerseits eine Führung des Kolbens durch die Punkte der Außenkontur, die den größten Durchmesser begrenzen, in dem Hohlzylinder gewährleistet, andererseits kann Flüssigkeit, welche durch die Eintrittsöffnung in den Innenraum des Hohlzylinders eintritt, zumindest an einigen Stellen der Außenkontur vorbeifließen und durch die wenigstens eine Ausgangsöffnung der Wandung aus dem Ventil wieder austreten. Vorzugsweise ist der Übergang vom ersten Bereich in den zweiten Bereich durch eine Krümmung ausgebildet. Durch die Kombination der Krümmung zwischen dem ersten und dem zweiten Bereich und der Ausbildung der Innenseite der Stirnwandung nach Art einer Außenfläche eines Kegelstumpfes wird die Flüssigkeit, welche durch die Eingangsöffnung axial in den Hohlzylinder des Ventils eintritt, entlang der Krümmung umgelenkt und in den durch die Ausbildung der Innenseite der Stirnwandung nach Art einer Außenfläche eines Kegelstumpfes erzeugten Hinterschnitt umgelenkt, so dass ein Wirbel erzeugt wird, Dieser Wirbel erzeugt einen Druck, welcher es nachströmender Flüssigkeit erschwert, in das Ventil einzudringen, so dass im Wesentlichen durch diesen Wirbel die Federkraft der Druckfeder des Ventils verstärkt wird. Dieses Ventil kann als Überdruckventil verwendet werden, wozu das Ventil so angeordnet ist, dass die Eingangsöffnung parallel zu einer Achse eines flüssigkeitsführenden Schlauchs angeordnet ist. Ist der Druck in dem flüssigkeitsführenden Schlauch groß genug, wird der Kolben mit seinem ersten Bereich aus der Eingangsöffnung gegen die Kraft der Druckfeder ausgelenkt, so dass ein Teil der Flüssigkeit in das Ventil durch die Eingangsöffnung einströmt und durch die Ausgangsöffnungen ausgeleitet werden kann. Dadurch wird ein Druckabfall in dem flüssigkeitsführenden Schlauch erzeugt und überschüssige Flüssigkeit abgeführt. Allerdings werden gegebenenfalls vorhandene Gasblasen ebenfalls über das Ventil abgeführt, so dass blasenfreie Flüssigkeit in den entsprechenden Behälter gefördert wird.

Vorzugsweise weist die Außenfläche der Stirnwandung eine Senkung zur Eintrittsöffnung hin auf, wodurch der Ansaugeffekt des Ventils im Hinblick auf die vorbeiströmende Flüssigkeit erhöht wird.

Besonders bevorzugt ist der Durchmesser des ersten Bereichs um etwa 5 % bis 15 %, vorzugsweise um etwa 10 %, seines Durchmessers kleiner als der Innendurchmesser der Eingangsöffnung. Dadurch kann auch bei in die Eingangsöffnung eingetauchtem ersten Bereich des Kolbens eine geringe Menge an Flüssigkeit an dem ersten Bereich vorbei bereits in das Innere des Hohlzylinders strömen und wird über das Ventil ausgeschleust. Insbesondere werden die eventuell vorhandenen Gasblasen über das Ventil aus der Flüssigkeit entfernt.

Besonders bevorzugt weist der zweite Bereich eine Außenkontur nach Art eines Mehrkants, insbesondere nach Art eines Sechskants, auf, so dass der zweite Bereich mit den Ecken des Mehrkants, insbesondere des Sechskants, an der Innenseite des Hohlzylinders anliegt und dadurch der Kolben in dem Hohlzylinder zentriert und geführt wird. Zwischen den Kanten des Mehrkants und der Innenwand des Hohlzylinders sind jedoch Bereiche vorhanden, durch welche Flüssigkeit strömen kann, um zu den Ausgangsöffnungen zu gelangen und durch diese das Ventil wieder zu verlassen.

Für bestimmte Arten von Flüssigkeiten schließt sich vorzugsweise an den zweiten Bereich des Kolbens ein dritter Bereich an, welcher zylindrisch ausgebildet ist, so dass vorzugsweise der Strömungsquerschnitt im dritten Bereich im Vergleich zu dem zweiten Bereich wiederum vergrößert wird und die Flüssigkeit besser abgeführt werden kann.

Besonders bevorzugt weist dazu der dritte Bereich einen Durchmesser auf, welcher im Wesentlichen dem Abstand zweier Kanten der Sechskantkontur des zweiten Bereichs entspricht.

Bei einer besonders vorteilhaften Weiterbildung der Erfindung weist der Kolben zumindest in dem ersten Bereich eine axiale Bohrung auf, durch welche auch im geschlossenen Zustand des Ventils, in welchem der erste Bereich des Kolbens in die Eintrittsöffnung eintaucht, Flüssigkeit durch die axiale Bohrung in den Innere des Hohlzylinders gelangen kann und somit abgeführt werden kann. Zudem bietet diese axiale Bohrung den Vorteil, dass, wenn keine Flüssigkeit mehr gefördert wird, über die axiale Bohrung in kurzer Zeit eine Druckentlastung ermöglicht wird, so dass anschließend die flüssigkeitsführenden Schläuche gefahrlos von Anschlüssen abgezogen werden können, ohne dass die Gefahr besteht, dass Überdruck auf der Leitung liegt und Flüssigkeit unter hohem Druck aus den Schlauchenden spritzt.

Besonders bevorzugt ist der Kolben ausgehend von dem zweiten Bereich an als Hohlzylinder ausgebildet, in welchem beispielsweise die Druckfeder zu liegen kommt, so dass einerseits die Druckfeder in dem zweiten Bereich geführt gelagert werden kann und der Kontakt zwischen der Druckfeder und dem Kolben gewährleistet ist.

Dieses Ventil wird in Kombination mit einer erfindungsgemäßen Pumpe verwendet, um ggf. in der Flüssigkeit vorhandene Gasblasen, die aufgrund von Kavitation entstanden sein könnten, oder beim Einfüllen der Flüssigkeit in die Flüssigkeit gelangen können, und in dem der Pumpe nachfolgenden Schlauchstück vorhanden sind, über das Ventil, welches mit seiner Längsachse im Wesentlichen quer zur Längsachse des die Flüssigkeit von der Pumpe zum Flüssigkeitsbehälter fördernden Schlauchs angeordnet wird, wieder auszuschleusen, da Gasblasen in der Regel den Weg des geringsten Widerstands gehen und somit über das Ventil aus dem Schlauch ausgeschleust werden. Dadurch wird weiterhin verhindert, dass Flüssigkeit, welche Gasblasen enthält, in die Bremsflüssigkeitsbehälter von Fahrzeugen eingeführt wird, was zu Ausfällen der Fahrzeuge, insbesondere der Bremsen, führen könnte. Daher wird insbesondere dieses Ventil vorteilhafterweise auch in einem Wartungsgerät zur Wartung von Fahrzeugen, insbesondere zur Wartung von Bremsen, Kupplungen und Schaltgetrieben von Fahrzeugen, verwendet.

Die Erfindung wird anhand der folgenden Figuren ausführlich erläutert. Es zeigt:
- Figur 1: einen Querschnitt in schematischer Darstellung durch eine Pumpe,
- Figur 2: eine schematische Ansicht einer Pumpe und eines Motors, welche an einem Gehäuse befestigt sind,
- Figur 3a: eine Draufsicht auf die erste Windung einer Schraubenfeder,
- Figur 3b: eine perspektivische Seitenansicht einer Schraubenfeder,
- Figur 3c: eine Draufsicht auf die letzte Windung der Schraubenfeder gemäß Figur 3b,
- Figur 4: einen Längsschnitt durch ein Ausführexngsbeispiel eines erfindungsgemäßen Ventils,
- Figur 5: einen Querschnitt entlang der Linie A-A gemäß Figur 4 und
- Figur 6: eine schematische Darstellung eines Bremswartungssystems.

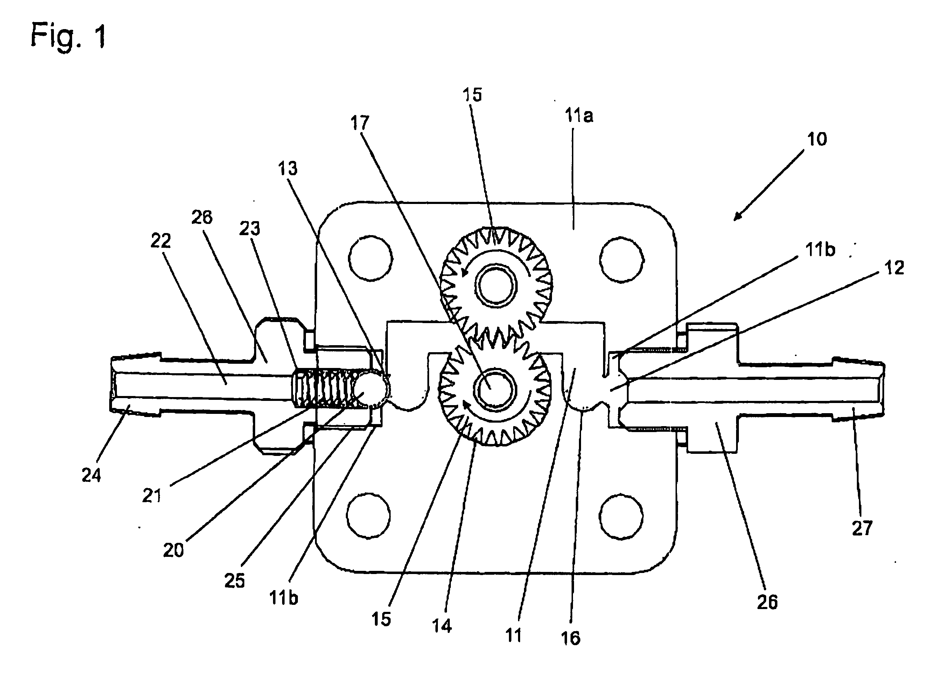

Figur 1 zeigt einen Schnitt in schematischer Darstellung durch eine Pumpe 10, welche ein geschlossenes Volumen 11 aufweist, welches von einer Gehäusewandung 11a umgeben ist. Die Gehäusewandung 11a weist in der Außenseite zwei Ausnehmungen 11b auf, wobei in einer der Ausnehmungen 11b ein Einlass 12 angeordnet ist, durch welchen die zu fördernde Flüssigkeit in die Pumpe 10 eintritt, und wobei in der anderen Ausnehmung 11b ein Auslass 13 angeordnet ist, durch welchen die zu fördernde Flüssigkeit aus der Pumpe 10 austritt. Innerhalb der Pumpe 10 ist der Einlass 12 mit dem Auslass 13 über einen Kanal 16 verbunden, in welchem etwa auf halbem Wege eine Fördermechanik 14 angeordnet ist. Die Fördermechanik 14 weist zwei zahnräder 15 auf, welche ineinander greifen und somit gegenläufig drehen, was durch die Pfeile angedeutet ist, wobei eines der beiden Zahnräder 15 drehfest mit einer Pumpenwelle 17 verbunden ist, über welche die Pumpe 10 angetrieben werden kann.

Beim Drehen der Zahnräder 15 kann an den Kanten der Zähne der Zahnräder 15 Kavitation auftreten. Dies wird vermieden durch einen strömungsabhängigen Widerstand, der durch ein Verschlusselement 20, welches mit einer Feder 21 belastbar ist, gebildet ist. Der Auslass 13 ist im Wesentlichen als zylindrische Bohrung im Boden der Ausnehmung 11b ausgebildet. Der Auslass 13 kann auch durch eine kegelförmig zulaufende Bohrung gebildet werden, wie beispielsweise in Figur 1 dargestellt. Das Verschlusselement 20 ist als Kugel mit einem Durchmesser ausgebildet, wobei der Durchmesser größer ist als der Durchmesser des Auslasses 13, damit der Auslass 13 in der Ruheposition durch die Verschlusselement 20 abgedeckt werden kann. Ist die Bohrung des Auslasses 13 als kegelförmige Bohrung ausgebildet, liegt die Kugel besonders sicher in der Öffnung des Auslasses 13. Der Durchmesser der das Verschlusselement 20 bildenden Kugel ist vorzugsweise um ein Drittel ihres Durchmessers größer als der Durchmesser des Auslasses 13. Beispielsweise beträgt der Durchmesser des Auslasses etwa 3 mm, während die Kugel einen Durchmesser von etwa 4,5 mm aufweist. Bei einem derartigen Verhältnis von Durchmesser des Verschlusselements 20 zu Durchmesser des Auslasses 13 kann die Kavitation am besten unterdrückt werden. Die Bohrung des Auslasses 13 ist entgratet, um scharfe Kanten zu vermeiden.

Die Feder 21 ist als Schraubenfeder ausgebildet, welche mit ihrem einen Ende an der das Verschlusselement 20 bildenden Kugel anliegt und welche mit ihrem anderen Ende an einem in einem Hohlzylinder 22 innenliegenden Vorsprung 23 anschlägt. Der Hohlzylinder 22 weist an seiner Außenseite ein Gewinde 25 auf, welches in ein entsprechendes Gewinde der Ausnehmung 11b eingeschraubt werden kann und so zuverlässig fixiert ist.

In die Ausnehmung 11b, in welcher der Einlass 12 liegt, kann ein Anschlusselement 26, vorzugsweise ebenfalls über ein Gewinde eingeschraubt werden, an welchem eine Schlauchtülle 27 angeordnet ist, um einen Schlauch mit der Pumpe verbinden zu können, dessen anderes Ende mit einem Tank verbunden ist, aus welchem Flüssigkeit mit Hilfe der Pumpe 10 gefördert werden soll.

Wird mit Hilfe der Pumpe 10 und den zahnrädern 15 Flüssigkeit über den Einlass 12 in die Pumpe 10 gefördert, wird aufgrund der Strömung der Flüssigkeit das Verschlusselement 20 von dem Auslass 13 weggedrückt. Dabei wird die Feder 21, welche sich an dem Vorsprung 23 des Hohlzylinders 22 abstützt, zusammengedrückt. Je größer die Strömungsgeschwindigkeit der durch die Pumpe 10 geförderten Flüssigkeit ist, umso mehr wird die Feder 21 zusammengedrückt. Dadurch wird der Gegendruck, der auf die im Wesentlichen in dem Kanal 16 befindliche Flüssigkeit ausgeübt wird, vergrößert. Die Erzeugung eines Gegendrucks durch das federbelastete Verschlusselement 20 führt dazu, dass der Druck innerhalb des Kanals 16 erhöht wird und somit die Flüssigkeit oder einzelne Komponenten der Flüssigkeit erst bei einer höheren Temperatur und damit einer Temperatur, die in der Regel über Betriebstemperatur liegt, beginnen zu sieden, so dass eine Kavitation vermieden wird.

Die Feder 21 ist vorzugsweise so dimensioniert, dass sie einen Gegendruck erzeugt, der etwa 10 % des von der Pumpe 10 erzeugten Drucks entspricht. Beträgt beispielsweise der Betriebsdruck der Pumpe 10 3 bar, erzeugt die Feder 21 einen Gegendruck von etwa 0,3 bar. Beträgt beispielsweise der Betriebsdruck der Pumpe 10 40 bar, erzeugt die Feder 21 einen Gegendruck von etwa 4 bar.

An dem Hohlzylinder 22 ist eine Schlauchtülle 24 angeordnet, über welche ein Schlauch an der Pumpe 10 angeordnet werden kann, welcher zu dem mit der zu fördernden Flüssigkeit zu füllenden Behälter führt.

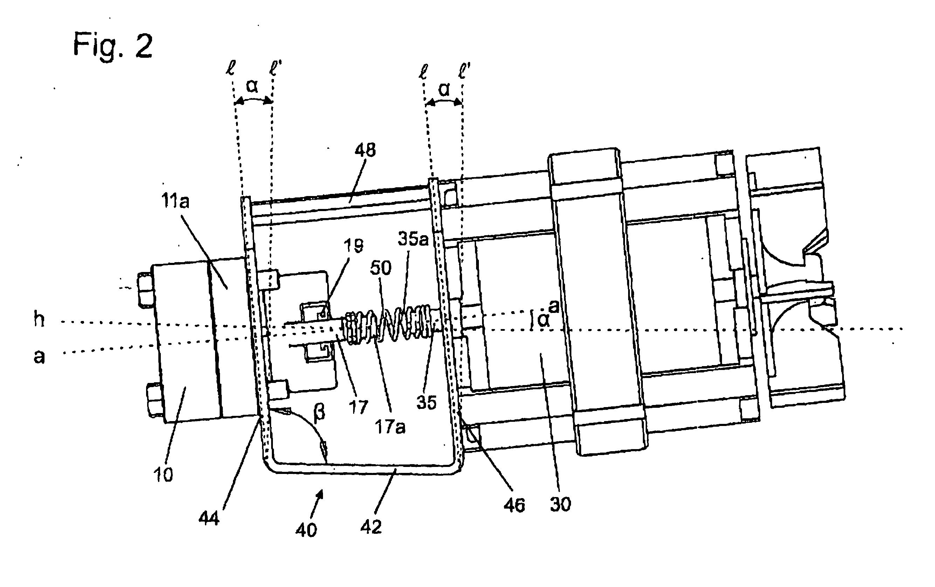

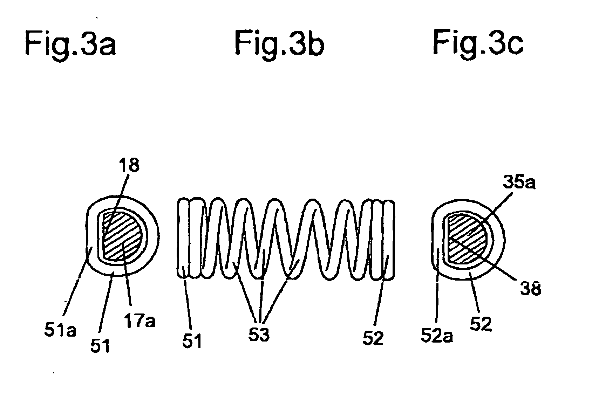

Figur 2 zeigt eine schematische Darstellung der Pumpe 10 mit ihrer Pumpenwelle 17, und einem die Pumpe 10 antreibenden Motor 30, welcher eine Motorwelle 35 aufweist. Die Pumpenwelle 17 weist eine Achse a auf, welche im Wesentlichen mit der Achse der Motorwelle 35 übereinstimmt. Die Pumpenwelle 17 weist ein freies Ende 17a auf, während die Motorwelle 35 ein freies Ende 35a aufweist. Die Pumpenwelle 17 und die Motorwelle 35 sind axial zueinander beabstandet, wobei das freie Ende 17a der Pumpenwelle 17 dem freien Ende 35a der Motorwelle 35 gegenüberliegt. Die Pumpenwelle 17 und die Motorwelle 35 sind über eine Schraubenfeder 50 miteinander verbunden, welche in den Figuren 3a, 3b und 3c detaillierter dargestellt ist.

Die Schraubenfeder 50 weist eine erste Windung 51 und eine letzte Windung 52 sowie mehrere dazwischen liegende Windungen 53 auf. Wie in den Figuren 3a und 3c ersichtlich, ist zumindest die erste Windung 51 und die letzte Windung 52 in der Draufsicht in Richtung der Längsachse der Schraubenfeder nicht rund, sondern mit einer Abflachung 51a bzw. 52a versehen. Zumindest die erste Windung 51a wird auf das freie Ende 17a der Pumpenwelle 17 geschoben, während zumindest die letzte Windung 52 auf das freie Ende 35a der Motorwelle 35 geschoben wird. Das freie Ende 17a der Pumpenwelle 17 weist dazu eine Abflachung 18 auf, während das freie Ende 35a der Motorwelle 35 eine Abflachung 38 aufweist. Die Abflachungen 18, 38 werden im Wesentlichen durch einen Schnitt parallel zur Längsachse a der Pumpenwelle 17 bzw. der Motorwelle 35 gebildet, beispielsweise ausgehend von dem freien Ende 17a bzw. 35a über eine Länge von 5 mm. Die Schraubenfeder 50 hat beispielsweise eine Länge von etwa 20 mm. Der axiale Abstand zwischen den beiden freien Enden 17a, 35a beträgt vorzugsweise etwa 10 mm. In den Figuren 3a und 3c ist der Querschnitt des freien Endes 17a der Pumpenwelle 17 bzw. des freien Endes 35a der Motorwelle 35 schraffiert eingezeichnet. Auf der Abflachung 18 des freien Endes 17a der Pumpenwelle 17 kommt die Abflachung 51a der ersten Windung 51 der Schraubenfeder 50 zu liegen, während auf der Abflachung 38 des freien Endes 35a der Motorwelle 35 die Abflachung 52a der letzten Windung 52 der Schraubenfeder 50 zu liegen kommt. Die Abflachungen 18, 38 der Pumpenwelle 17 bzw. der Motorwelle 35 bilden in Kombination mit den Abflachungen 51a, 52a der Windungen 51, 52 der Schraubenfeder 50 eine Verdrehsicherung, so dass bei Drehung der Motorwelle 35 das Drehmoment über die Schraubenfeder 50 auf die Pumpenwelle 17, ggf. erst nach Torsion der Schraubenfeder 50, übertragen wird. Die Schraubenfeder 50 stellt dabei jedoch sicher, dass auch bei nicht exakter Ausrichtung der Achse a der Pumpenwelle 17 zur Achse der Motorwelle 35 kein Verkanten der Wellen 17, 35 auftritt und die Pumpe 10 zuverlässig über den Motor 30 angetrieben werden kann. Sollte die Pumpe 10 blockieren, stellt die Schraubenfeder 50 eine Sollbruchstelle der Verbindung zwischen der Pumpe 10 und dem Motor 30 dar, so dass auch bei weiterlaufendem Motor 30 nach Bruch der Schraubenfeder 50 kein Drehmoment mehr auf die Pumpenwelle 17 der Pumpe 10 übertragen wird und die Pumpe 10 somit nicht beschädigt wird.

Figur 2 zeigt weiterhin ein Gehäuse 40, in welchem die Pumpe 10 und der Motor 30 relativ zueinander in einer bestimmten Position fixiert werden können. Die Achse a der Pumpenwelle 17 ist in einem Winkel α gegen die Horizontale h geneigt. Der Durchtritt der Pumpenwelle 17 durch die Gehäusewandung 11a der Pumpe 10 ist mit einer Dichtung 19 abgedichtet. Die Dichtung ist dabei insbesondere als Wellendichtung ausgebildet. Trotzdem kann die Dichtung 19 oft nicht verhindern, dass zwischen der Dichtung 19 und der Pumpenwelle 17 Flüssigkeit aus der Pumpe 10 austritt. Durch die Neigung der Achse a der Pumpenwelle 17 gegen die Horizontale h wird erreicht, dass entlang der Pumpenwelle 17 austretende Flüssigkeit aufgrund der Schwerkraft in Richtung auf die Dichtung 19 und die Pumpe 10 zurückläuft. Dies hält einerseits die Dichtung 19 elastisch, so dass die Lebensdauer der Dichtung 19 vergrößert wird. Andererseits fließt die Flüssigkeit entlang der Pumpenwelle 17 in Richtung der Pumpe 10 zurück, so dass zwischen der Pumpenwelle 17 und der Dichtung 19 ein Flüssigkeitsfilm gebildet wird, der weiteren Austritt von Flüssigkeit entlang der Pumpenwelle 17 verhindert. Zudem wird der Austritt von Flüssigkeit aus dem Innenraum der Pumpe 10 entlang der Dichtung 19 aufgrund der Neigung erschwert.

Um die Pumpe 10 im Betriebszustand im geneigten Zustand zu fixieren, ist diese an dem Gehäuse 40 fixiert. Das Gehäuse 40 ist dabei im Wesentlichen U-Profil-artig ausgebildet mit einem Bodenbereich 42, einem ersten Schenkel 44 und einem zweiten Schenkel 46. Der Bodenbereich 42 verläuft im Wesentlichen horizontal. Die beiden freien Enden der Schenkel 44, 46 können zu Stabilisierungszwecken über einen Steg 48 miteinander verbunden sein. Bei bekannten U-Profilen verlaufen die Schenkel 44, 46 im Wesentlichen senkrecht zu dem Bodenbereich 42, welches in Figur 2 durch die mit 1' gekennzeichneten gestrichelten Linien angedeutet ist. Bei dem vorliegenden Gehäuse 40 sind jedoch der erste Schenkel 44 und der zweite Schenkel 46 um den Winkel α gegen die ursprüngliche Position 1' in die Position 1 ausgelenkt, wobei weiterhin der erste Schenkel 44 und der zweite Schenkel 46 parallel zueinander verlaufen. Insgesamt steht somit der erste Schenkel 44 in einem Winkel β zu dem Bodenbereich 42, wobei der Winkel β gleich 90° + α ist. Sowohl die Pumpe 10 als auch der Motor 30 weisen ein Gehäuse derart auf, dass die Pumpenwelle 17 bzw. die Motorwelle 35 im Wesentlichen senkrecht zu einer der Gehäuseflächen austritt. Mit dieser Stirnseite wird die Pumpe 10 bzw. der Motor 30 auf der Außenfläche des ersten Schenkels 44 bzw. des zweiten Schenkels 46 angeordnet. Die Schenkel 44, 46 weisen eine Öffnung auf, durch welche die Pumpenwelle 17 und die Motorwelle 35 geführt werden können. Die Pumpenwelle 17 und die Motorwelle 35 zeigen somit in das Innere des U-profilartigen Gehäuses 40 und werden an den Schenkeln 44, 46 derart fixiert, dass die Motorwelle 35 in Verlängerung der Pumpenwelle 17 verläuft.

Der Abstand der beiden Schenkel 44, 46 ist dabei so dimensioniert, dass das freie Ende 17a axial zu dem freien Ende 35a der Motorwelle 35 beabstandet ist und die beiden freien Enden 17a, 35a durch die Schraubenfeder 50 miteinander verbunden werden können. Es ist grundsätzlich möglich, die Verbindung der Motorwelle 35 mit der Pumpenwelle 17 über die Schraubenfeder 50 auch bei horizontal angeordneter Pumpenwelle 17 zu verwenden oder die gegen die Horizontale geneigte Pumpenwelle 17 über eine anderen Kopplung mit der Motorwelle 35 zu verbinden, insbesondere auch die Motorwelle 35 mit der Pumpenwelle 17 einstückig auszubilden.

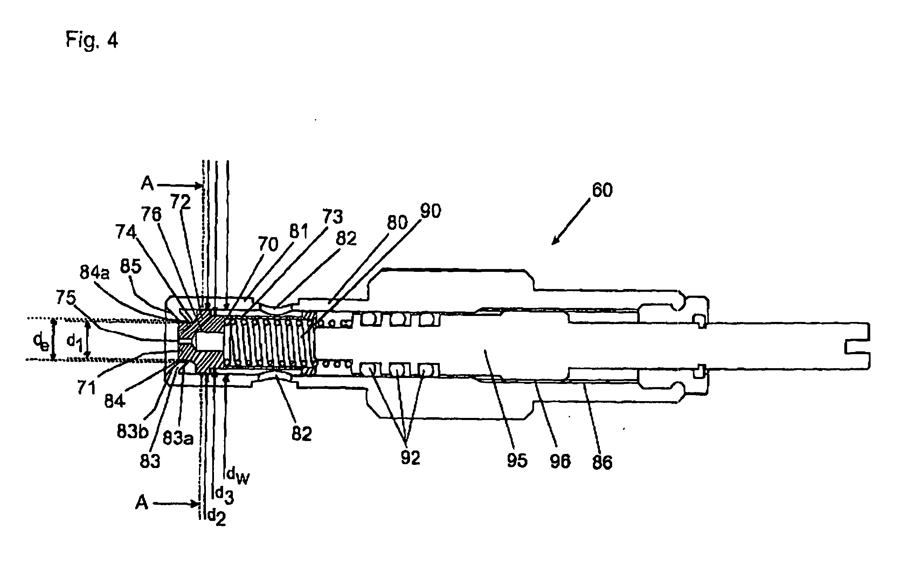

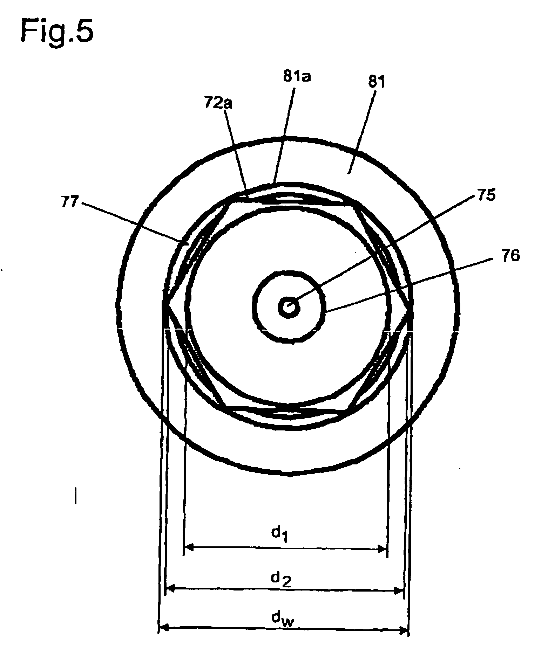

Figur 4 zeigt einen Längsschnitt durch ein Ventil 60, Figur 5 zeigt einen Querschnitt entlang der Linie A-A in Figur 4 durch dieses Ventil 60. Das Ventil 60 weist einen Hohlzylinder 80 auf, in welchem ein durch eine Druckfeder 90 belasteter Kolben 70 entlang der Längsachse des Hohlzylinders 80 verschiebbar geführt ist.

Der Hohlzylinder 80 weist eine Wandung 81 mit einer Innenseite 81a auf, wobei die Wandung 81 einen Innendurchmesser d_{w} aufweist. In der Wandung 81 sind zwei diametral einander gegenüberliegende Ausgangsöffnungen 82 angeordnet. Eine Stirnseite der zylindrischen Wandung 81 wird durch eine Stirnwandung 83 abgeschlossen, welche eine Innenseite 83a und eine Außenseite 83b aufweist. In der Stirnwandung 83 ist eine Eingangsöffnung 84 angeordnet, welche im Wesentlichen aus einer zylindrischen Bohrung mit einer zylindrischen Wand 84a gebildet ist. Die Eingangsöffnung 84 weist einen Innendurchmesser dₑ auf, welcher deutlich kleiner ist als der Innendurchmesser d_{w} der Wandung 81. Die Innenseite 83a der Stirnwandung 83 ist nach Art der Außenfläche eines Kegelstumpfes ausgebildet. Die Spitze des Kegelstumpfes zeigt somit in das Innere der Wandung 81, so dass entlang der Eingangsöffnung 84 und der Stirnwandung 83 im Längsschnitt eine Art dreieckiger Hinterschnitt gebildet ist. Die Außenseite 83b der Stirnwandung 83 kann im Wesentlichen senkrecht zu der Wandung 81 verlaufen, vorzugsweise weist die Außenseite 83b jedoch eine Senkung 85 zur Eingangsöffnung 84 hin auf, so dass die Außenseite 83b im Wesentlichen nach Art der Innenfläche eines Kegelstumpfs ausgebildet ist. Diese Senkung 85 fördert die Ansaugwirkung von Flüssigkeit, die beispielsweise in einem Schlauch, dessen Längsachse senkrecht zur Längsachse des Hohlzylinders 80 steht, an der Eingangsöffnung 84 des Ventils 60 vorbeigeführt wird.

Der Kolben 70 weist einen ersten Bereich 71, einen zweiten Bereich 72 und einen dritten Bereich 73 auf. Der erste Bereich 71 ist im Wesentlichen zylindrisch mit einem Durchmesser d₁ ausgebildet. Die freie umlaufende Kante des ersten Bereichs 71 ist scharfkantig ausgebildet. An den ersten Bereich 71 schließt sich der zweite Bereich 72 an, welcher eine Außenkontur 72a aufweist, die unrund ist. Eine unrunde Außenkontur kann beispielsweise durch ein Ellipsoid oder einen Mehrkant erreicht werden, wobei vorliegend die Außenkontur 72a die Außenkontur eines Sechskants ist. Der zweite Bereich 72 weist somit einen größten Durchmesser d₂ auf, welcher vorliegend dem Abstand zweier diametral gegenüberliegender Ecken des Sechskants entspricht. Der größte Durchmesser d₂ des zweiten Bereichs 72 ist nur geringfügig kleiner als der Innendurchmesser d_{w} der Wandung 81, so dass der Kolben 70 über den zweiten Bereich 72 in der Wandung 82 des Hohlzylinders 80 dadurch geführt ist, dass die Kanten des Sechskants an der Innenseite 81a der Wandung 81 anliegen. Zwischen der Außenkontur 72a und der Wandung 81 des Hohlzylinders 80 liegen jedoch kreiskappenförmige Bereiche 77, durch welche Flüssigkeit an dem zweiten Bereich 72 und der Wandung 81 entlang strömen kann.

Der zweite Bereich 72 mit der unrunden Außenkontur 72a kann sich im Wesentlichen über die gesamte Länge des Kolbens 70 ausgenommen des ersten Bereichs 71 erstrecken. Vorzugsweise schließt an den zweiten Bereich 72 jedoch ein dritter Bereich 73 an, welcher im Wesentlichen zylindrisch mit einem Durchmesser d₃ ausgebildet ist. Der Durchmesser d₃ ist kleiner als der Durchmesser d₂ des zweiten Bereichs 72, jedoch größer als der Durchmesser d₁ des ersten Bereichs 71. Dadurch wird zwischen dem dritten Bereich 73 und der Wandung 71 ein im Wesentlichen ringförmiger Bereich ausgebildet, durch welchen die Flüssigkeit auf die Ausgangsöffnungen 82 der Wandung 81 zuströmen kann. Ob ein dritter Bereich 73 verwendet wird oder nicht, hängt im Wesentlichen von der Art der Flüssigkeit ab, welche durch das Ventil 60 strömen soll.

Der Durchmesser d₁ des ersten Bereichs 71 ist kleiner als der Innendurchmesser dₑ der Eingangsöffnung 84, wobei der Kolben 70 durch die Druckfeder 90 derart federbelastet ist, dass der erste Bereich 71 in die Eingangsöffnung 84 eintritt und in einer Ruheposition, d.h. bei entspannter Druckfeder 90, in dieser angeordnet ist. Ist der Durchmesser d₁ des ersten Bereichs 71 nur geringfügig kleiner als der Innendurchmesser dₑ der Eingangsöffnung 84, schließt der erste Bereich 71 im Wesentlichen die Eingangsöffnung 84 ab. Vorzugsweise ist jedoch der Durchmesser d₁ des ersten Bereichs 71 um etwa 5 bis 15 %, vorzugsweise etwa 10 %, seines Durchmessers d₁ kleiner als der Innendurchmesser dₑ der Eingangsöffnung 84, so dass auch bei Anordnung des ersten Bereichs 71 des Kolbens 70 in der Eingangsöffnung 84 ein ringförmiger Spalt zwischen der Wand 84a der Eingangsöffnung 84 und dem ersten Bereich 71 des Kolbens 70 verbleibt, durch welchen Flüssigkeit in das Ventil 60 einströmen kann. Beispielsweise beträgt der Durchmesser d₁ des ersten Bereichs 71 etwa 4,1 mm, während der Innendurchmesser dₑ der Eingangsöffnung 84 etwa 4,4 mm beträgt.

Der Übergang zwischen dem ersten Bereich 71 und dem zweiten Bereich 72 ist mit einer Krümmung 74 abgerundet, was zur Folge hat, dass an dem ersten Bereich 71 entlang strömende Flüssigkeit über die Krümmung 74 abgelenkt wird. Durch die kegelförmigen Ausbildung der Innenseite 83a der Stirnwandung 83 wird die Flüssigkeit in diesen Hinterschnitt geführt, was dazu führt, dass sich ein Wirbel entlang der Krümmung 74 bildet. Die Ausbildung des Wirbels wird durch die scharfkantige Kante des ersten Bereichs 71 begünstigt. Dieser Wirbel verstärkt die Federkraft der Druckfeder 90.

In dem ersten Bereich 71 ist eine axiale Bohrung 75 angeordnet, welche in Verbindung mit dem Innenraum der Wandung 81 steht, so dass über sie auch im geschlossenen Zustand des Ventils 60 Flüssigkeit in den Innenraum des Hohlzylinders 80 eindringen kann und abgeführt wird. Die axiale Bohrung 75 hat einen derartig kleinen Durchmesser, dass der Druckabfall während des Betriebs nicht nennenswert ist. Allerdings bewirkt die axiale Bohrung 75, dass, sobald die Flüssigkeitsströmung eingestellt wird, nach kurzer zeit eine Druckentlastung des flüssigkeitsfördernden Schlauchs über die axiale Bohrung 75 erfolgen kann, so dass keine Gefahr besteht, dass bei Abzug des flüssigkeitsfördernden Schlauchs von den entsprechenden Anschlüssen Flüssigkeit mit hohem Druck in die Umgebung entweichen kann.

In dem zweiten Bereich erweitert sich die axiale Bohrung 75 in eine Ausnehmung 76, um ein Abfließen der Flüssigkeit und Wirbelbildung zu vermeiden. Der Kolben 70 ist im Wesentlichen im dritten Bereich 73 als Hohlzylinder mit nur geringer Wandstärke ausgebildet, so dass die Druckfeder 90 in den Kolben 70 im Wesentlichen in den dritten Bereich 73 eingeführt werden kann und auf dem zwischen der Ausnehmung 76 und dem hohlzylinderartigen dritten Bereich 73 gebildeten Vorsprung zu liegen kommt, wodurch die Druckfeder 90 an dem Kolben 70 anliegt und die Federkraft übertragen werden kann.

Mit ihrem anderen Ende stützt sich die Druckfeder 90 an einem Verstellglied 95 ab, welches über ein an dem Verstellglied 95 angeordnetes Gewinde 96 an dem Verstellglied 95 und über ein an der Innenseite 81a der Wandung 81 angeordnetes Gewinde 86 axial fest in dem Hohlzylinder 80 fixiert werden kann und nur über Drehung entlang der Längsachse des Hohlzylinders 80 verstellt werden kann. Über das Verstellglied 95 kann somit die Feder 90 in gewünschter Stärke vorgespannt werden. Damit keine Flüssigkeit entlang des Verstellglieds 95 aus dem Ventil 60 austritt, sind zwischen dem Verstellglied 95 und der Wandung 81 des Hohlzylinders 80 mehrere um das Verstellglied 95 umlaufende, beispielsweise drei, Dichtringe 92 angeordnet.

Über das Ventil 60 kann ein gewünschter Betriebsdruck, mit welchem ein Flüssigkeitsbehälter gefüllt werden soll, eingestellt werden. Eine Pumpe liefert beispielsweise einen bestimmten Druck, der jedoch höher ist als der Druck, mit welchem Flüssigkeit beispielsweise in einen Bremsflüssigkeitsbehälter eingeführt werden kann. Dazu wird senkrecht zu der flüssigkeitsführenden Leitung das Ventil 60 eingebaut und mit Hilfe des Verstellglieds 95 der gewünschte Betriebsdruck, mit welchem der Bremsflüssigkeitsbehälter gefüllt werden kann, eingestellt. Liefert eine Pumpe beispielsweise einen sehr hohen Druck, wird jedoch ein geringer Betriebsdruck benötigt, wird die Druckfeder 90 kaum vorgespannt, so dass ein großer Teil der Flüssigkeit durch das Ventil 60 aus der flüssigkeitsführenden Leitung abgeführt und nur ein geringer Teil mit dem entsprechend gewünschten Druck an dem Ventil 60 vorbei in das Bremsflüssigkeitssystem geführt wird. Insbesondere werden evtl. in der Flüssigkeit vorhandene Gasblasen über das Ventil 60 abströmen, so dass die Flüssigkeit gasblasenfrei eingeführt wird und keine Beeinträchtigungen beispielsweise der Bremsen zu befürchten sind.

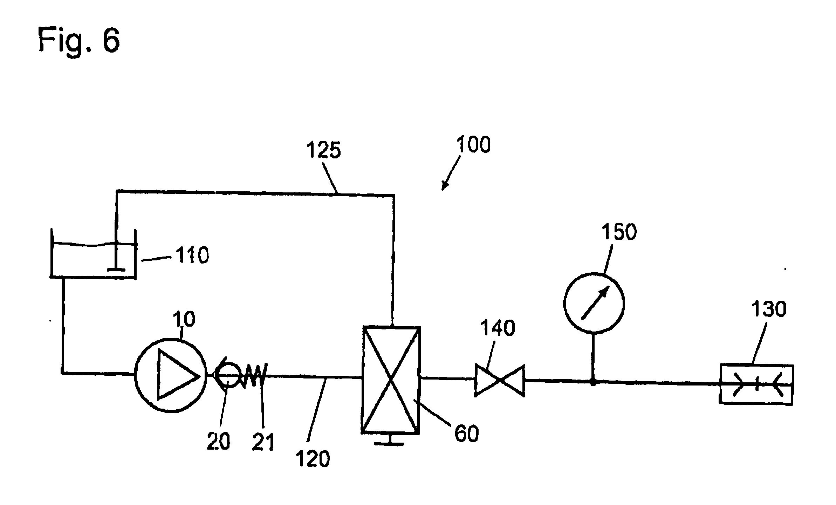

In Figur 6 ist eine schematische Darstellung eines Wartungssystems, insbesondere eines Bremswartungssystems 100 dargestellt. Das Bremswartungssystem 100 weist einen Tank 110 auf, welcher das Reservoir für die zu fördernde Flüssigkeit, insbesondere eine Bremsflüssigkeit, darstellt. Aus dem Tank 110 wird mit Hilfe der Pumpe 10 Flüssigkeit aus dem Tank 110 gefördert. An der Pumpe 10 ist der strömungsabhängige Widerstand in Form des mit der Feder 21 belasteten Verschlusselements 20 angeordnet, um innerhalb der Pumpe 10 Kavitation zu vermeiden. Die Pumpe 10 ist ausgangsseitig über eine Leitung 120 mit einer Schnellverschlusskupplung 130 verbunden, welche an den mit Flüssigkeit zu befüllenden Behälter, insbesondere einen Bremsflüssigkeitsbehälter eines Fahrzeugs, angeschlossen werden kann. In der Leitung 120 ist das Ventil 60 angeordnet, über welches Flüssigkeit über eine Leitung 125 in den Tank 110 rückgeführt werden kann. Dabei steht die Längsachse des Ventils 60 senkrecht zur Längsachse der Leitung 120.

Der nicht dargestellte Bremsflüssigkeitsbehälter kann in Abhängigkeit von dem entsprechenden Fahrzeug nur mit einem maximalen Druck befüllt werden. Da die Pumpe 10 einen Druck von bis 40 bar erzeugen kann, ist es nötig, über das Ventil 60 den Druck zu reduzieren und einen Teil der Flüssigkeit über die Leitung 125 in den Tank 110 rückzuführen. An dem Ventil 60 kann der gewünschte Druck, mit welchem der Bremsflüssigkeitsbehälter gefüllt werden kann, eingestellt werden, so dass mit Hilfe des Ventils 60 der Druck so weit reduziert werden kann, dass der Bremsflüssigkeitsbehälter gefahrlos befüllt werden kann. Der Überschuss an Flüssigkeit wird somit über das Ventil 60 abgezweigt und vorzugsweise in den Tank 110 rückgeführt. Dem Ventil 60 kann ein weiteres Ventil 140 nachgeschaltet werden, um beispielsweise eine Dichtigkeitsprüfung des hydraulischen Systems, z.B. des hydraulischen Brems- oder Kupplungssystems von Fahrzeugen, durchführen zu können. Zwischen dem Ventil 140, welches beispielsweise als Kugelhahn ausgebildet sein kann, und der Schnellverschlusskupplung, ist ein Betriebsdruckmanometer 150 angeordnet, mit Hilfe dessen überprüft werden kann, ob tatsächlich der gewünschte Druck zur Befüllung des entsprechenden Bremsflüssigkeitsbehälters anliegt. Mit Hilfe dieses Bremswartungssystems 100 ist es möglich, Flüssigkeit möglichst gasblasenfrei in den entsprechenden Bremsflüssigkeitsbehälter einzufüllen und insbesondere den gewünschten Druck entsprechend über das Ventil 60 zu regeln.

### Bezugszeichenliste

- 10: Pumpe
- 11: Volumen
- 11a: Gehäusewandung
- 11b: Ausnehmung
- 12: Einlass
- 13: Auslass
- 14: Fördermechanik
- 15: zahnrad
- 16: Kanal
- 17: Pumpenwelle
- 17a: freies Ende
- 18: Abflachung
- 19: Dichtung

- 20: Verschlusselement
- 21: Feder
- 22: Hohlzylinder
- 23: Vorsprung
- 24: Schlauchtülle
- 25: Gewinde
- 26: Anschlusselement
- 27: Schlauchtülle

- 30: Motor
- 35: Motorwelle
- 35a: freies Ende
- 38: Abflachung

- 40: Gehäuse
- 42: Bodenbereich
- 44: erster Schenkel
- 46: zweiter Schenkel
- 48: Steg

- 50: Schraubenfeder
- 51: erste Windung
- 51a: Abfachung
- 52: letzte Windung
- 52a: Abfachung
- 53: Windung

- 60: Ventil

- 70: Kolben
- 71: erster Bereich
- 72: zweiter Bereich
- 72a: Außenkontur
- 73: dritter Bereich
- 74: Krümmung
- 75: axiale Bohrung
- 76: Ausnehmung
- 77: Bereich

- 80: Hohlzylinder
- 81: Wandung
- 81a: Innenseite
- 82: Ausgangsöffnung
- 83: Stirnwandung
- 83a: Innenseite
- 83b: Außenseite
- 84: Eingangsöffnung
- 84a: Wand
- 85: Senkung
- 86: Gewinde

- 90: Druckfeder
- 92: Dichtring
- 95: Verstellglied
- 96: Gewinde

- 100: Bremswartungssystem
- 110: Tank
- 120: Leitung
- 125: Leitung
- 130: Schnellverschlusskupplung
- 140: Ventil
- 150: Manometer

- d_{w}: Innendurchmesser der Wandung
- dₑ: Innendurchmesser der Eingangsöffnung
- d₁: Durchmesser des ersten Bereichs
- d₂: Durchmesser des zweiten Bereichs
- d₃: Durchmesser des dritten Bereichs

- α: Winkel
- β: Winkel

- h: Horizontale
- a: Achse der Pumpenwelle
- 1: Achse des Schenkels
- 1': Achse des Schenkels

## Patentansprüche

1. Pumpe (10) mit einem Motor (30), wobei die Pumpe (10) eine Pumpenwelle (17) aufweist, welche über eine Motorwelle (35) des Motors (30) angetrieben ist, wobei die Motorwelle (35) und die Pumpenwelle (17) an ihren freien Enden (17a, 35a) axial beabstandet und über eine Schraubenfeder (50) miteinander verbunden sind,
**dadurch gekennzeichnet, dass** die freien Enden (17a, 35a) der Pumpenwelle (17) und der Motorwelle (35) zumindest an einer Seite abgeflacht sind und zumindest die erste (51) und die letzte Windung (52) der Schraubenfeder (50) entsprechend abgeflacht ist.

2. Pumpe (10) nach Anspruch 1 zur Förderung von Flüssigkeiten mit einem geschlossenen Volumen (11),
**dadurch gekennzeichnet, dass** das Volumen (11) einen Einlass (12) und einen Auslass (13) aufweist, wobei in dem geschlossenen Volumen eine Fördermechanik (14) angeordnet ist, wobei an dem Auslass (13) ein strömungsabhängiger Widerstand angeordnet ist, wobei der Widerstand durch ein mit einem Federelement (21) belastetes Verschlusselement (20) gebildet ist, welches in Abhängigkeit von der Strömung gegen die Federkraft auslenkbar ist und wobei das Verschlusselement (20) als Kugel mit einem Durchmesser ausgebildet ist, welcher etwa um ein Drittel seines Durchmessers größer ist als der Durchmesser des Auslasses (13).

3. Pumpe nach Anspruch 2,
**dadurch gekennzeichnet, dass** das Verschlusselement (20) als Kugel mit einem Durchmesser von etwa 4,5 mm ausgebildet ist.

4. Pumpe nach einem der Ansprüche 2 oder 3,
**dadurch gekennzeichnet, dass** der Ausdass (13) einen Durchmesser von etwa 3 mm aufweist.

5. Pumpe nach einem der Ansprüche 2 bis 4,
**dadurch gekennzeichnet, dass** das Federelement (21) als Schraubenfeder ausgebildet ist.

6. Pumpe nach Anspruch 5,
**dadurch gekennzeichnet, dass** die Schraubenfeder (21) in einem Hohlzylinder (22) angeordnet ist, welcher einen innenliegenden Vorsprung (23) aufweist, an welchem sich die Schraubenfeder (21) abstützt.

7. Pumpe nach Anspruch 6,
**dadurch gekennzeichnet, dass** an dem Hohlzylinder (22) eine Schlauchtülle (24) angeordnet ist.

8. Pumpe nach Anspruch 6 oder 7,
**dadurch gekennzeichnet, dass** der Hohlzylinder (22) an seinem Außenumfang ein Gewinde (25) aufweist.

9. Pumpe nach einem der vorhergehenden Ansprüche,
**dadurch gekennzeichnet, dass** die Pumpe (10) als Verdrängerpumpe, insbesondere als Zahnradpumpe, ausgebildet ist.

10. Pumpe (10) nach einem der vorhergehenden Ansprüche
**dadurch gekennzeichnet, dass** die Pumpenwelle (17) im Betriebszustand der Pumpe (10) um einen Winkel (α) gegen die Horizontale (h) geneigt angeordnet ist.

11. Pumpe nach Anspruch 10,
**dadurch gekennzeichnet, dass** der Winkel (α) 3° bis 10°, vorzugsweise etwa 6°, beträgt.

12. Pumpe nach einem der Ansprüche 10 bis 11,
**dadurch** gekenntzeichnet, dass die Motorwelle (35) in Verlängerung der Pumpenwelle (17) angeordnet ist.

13. Pumpe nach einem der Ansprüche 10 bis 12,
**dadurch gekennzeichnet, dass** die Pumpe (10) und der Motor (30) in einem Gehäuse (40) retativ zueinander fixierbar sind.

14. Pumpe nach Anspruch 13,
**dadurch gekennzeichnet, dass** das Gehäuse (40) zumindest ein U-Profil mit einem Bodenbereich (42) und zwei Schenkeln (44, 46) aufweist, wobei die Schenkel parallel (44, 46) zueinander um den Winkel (α) aus ihrer Position senkrecht zum Bodenbereich (42) ausgelenkt sind.

15. Verwendung einer Pumpe (10) nach einem der vorhergehenden Ansprüche in einem Wartungsgerät zur Wartung von Fahrzeugen, insbesondere zur Wartung von Bremsen, Kupplungen und Schaltgetrieben von Fahrzeugen.

16. Pumpe nach einem der Ansprüche 1 bis 14 mit einem fluidbetätigbaren Ventil (60) mit einem durch eine Druckfeder (90) belasteten Kolben (70), der in einem Hohlzylinder (80) verschiebbar geführt ist,
wobei der Hohlzylinder (80) aufweist:
- eine zylindrische Wandung (81) mit einem Innendurchmesser (dᵥ), wobei in der Wandung (81) wenigstens eine Ausgangsöffnung (82) angeordnet ist,
- eine Stirnwandung (83), die an einer Stirnseite der Wandung (81) angeordnet ist, wobei die Stirnwandung (83) eine Eingangsöffnung (84) mit einem Innendurchmesser (dₑ) und einer im wesentlichen zylindrischen Wand (84a) aufweist und
- wobei die Innenseite (83a) der Stirnwandung (83) nach Art einer Außenfläche eines Kegelstumpfes ausgebildet ist,
und wobei der Kolben (70) aufweist:
- einen ersten, vorderen im Wesentlichen zylindrischen Bereich (71) mit einem Durchmesser (d₁), der kleiner ist als der Innendurchmesser (dₑ) der Eingangsöffnung (84),
- einen zweiten Bereich (72), welcher sich an den ersten Bereich (71) anschließt, wobei der zweite Bereich (72) eine unrunde Außenkontur (72a) aufweist, deren größter Durchmesser (d₂) kleiner ist als der Innendurchmesser (d_{w}) der Wandung (81), wobei der Übergang vom ersten Bereich (71) in den zweiten Bereich (72) durch eine Krümmung (74) ausgebildet ist,
wobei der Kolben (70) mit seinem ersten Bereich (71) über die Druckfeder (90) federnd in die Eintrittsöffnung (84) drückbar ist.

17. Pumpe nach Anspruch 16,
**dadurch gekennzeichnet, dass** die Außenfläche (83b) der Stirnwandung (83) eine Senkung (85) aufweist.

18. Pumpe nach einem der Ansprüche 16 bis 17,
**dadurch gekennzeichnet, dass** der Durchmesser (d₁) des ersten Bereichs (71) um etwa 5 % bis 15 %, vorzugsweise um etwa 10 %, seines Durchmessers (d₁) kleiner ist als der Innendurchmesser (dₑ) der Eingangsöffnung.

19. Pumpe nach einem der Ansprüche 16 bis 18,
**dadurch gekennzeichnet, dass** der Durchmesser (d₁) des ersten Bereichs (71) etwa 4,1 mm beträgt.

20. Pumpe nach einem der Ansprüche 16 bis 19,
**dadurch gekennzeichnet, dass** der Innendurchmesser (dₑ) der Eingangsöffnung (84) etwa 4,4 mm beträgt.

21. Pumpe nach einem der Ansprüche 16 bis 20,
**dadurch gekennzeichnet, dass** der zweite Bereich (72) eine Außenkontur (72a) nach Art eines Mehrkants, insbesondere nach Art eines Sechskants, aufweist.

22. Pumpe nach einem der Ansprüche 16 bis 21,
**dadurch gekennzeichnet, dass** sich an den zweiten Bereich (72) des Kolbens (70) ein dritter Bereich (73) anschließt, welcher zylindrisch ausgebildet ist.

23. Pumpe nach Anspruch 21 und 22,
**dadurch gekennzeichnet, dass** der dritte Bereich (73) einen Durchmesser (d₃) aufweist, welcher dem Abstand zweier Kanten der Sechskantkontur des zweiten Bereichs (72) entspricht.

24. Pumpe nach einem der Ansprüche 16 bis 23,
**dadurch gekennzeichnet, dass** der Kolben (70) zumindest in dem ersten Bereich (71) eine axiale Bohrung (75) aufweist.

25. Pumpe nach einem der Ansprüche 16 bis 24,
**dadurch gekennzeichnet, dass** der Kolben (70) ausgehend von dem zweiten Bereich (72) an als Hohlzylinder ausgebildet ist.

## Claims

1. A pump (10) with a motor (30), wherein the pump (10) has a pump shaft (17) which is driven by way of a shaft (35) of the motor (30), wherein the motor shaft (35) and the pump shaft (17) are at an axial distance at the free ends (17a, 35a) thereof and are connected to each other by way of a helical spring (50), **characterized in that** the free ends (17a, 35a) of the pump shaft (17) and the motor shaft (35) are flattened at least on one side and at least the first coil (51) and the last coil (52) of the helical spring (50) are flattened accordingly.

2. A pump (10) according to claim 1 for the conveying of liquids with a closed volume (11), **characterized in that** the volume (11) has an inlet (12) and an outlet (13), wherein a conveying mechanism (14) is arranged in the closed volume, wherein a flow-dependent resistance is arranged at the outlet (13), wherein the resistance is formed by a closure element (20) which is loaded by a spring element (21) and which is capable of being deflected against the spring force in a manner dependent upon the flow, and wherein the closure element (20) is designed in the form of a sphere with a diameter which is larger by approximately a third of its diameter than the diameter of the outlet (13).

3. A pump according to claim 2, **characterized in that** the closure element (20) is designed in the form of a sphere with a diameter of approximately 4.5 mm.

4. A pump according to one of claims 2 or [*sic*] 3, **characterized in that** the outlet (13) has a diameter of approximately 3 mm.

5. A pump according to any one of claims 2 to 4, **characterized in that** the spring element (21) is designed in the form of a helical spring.

6. A pump according to claim 5, **characterized in that** the helical spring (21) is arranged in a hollow cylinder (22) which has a projection (23) which is situated on the inside and on which the helical spring (21) is supported.

7. A pump according to claim 6, **characterized in that** a hose socket (24) is arranged on the hollow cylinder (22).

8. A pump according to claim 6 or 7, **characterized in that** the hollow cylinder (22) has a thread (25) on its external periphery.

9. A pump according to any one of the preceding claims, **characterized in that** the pump (10) is designed in the form of a displacement pump, in particular in the form of a gear pump.

10. A pump (10) according to any one of the preceding claims, **characterized in that** the pump shaft (17) is arranged inclined with respect to the horizontal (h) by an angle (α) in the operative state of the pump (10).

11. A pump according to claim 10, **characterized in that** the angle (α) amounts to from 3° to 10°, preferably approximately 6°.

12. A pump according to one of claims 10 to 11, **characterized in that** the motor shaft (35) is arranged as a continuation of the pump shaft (17).

13. A pump according to any one of claims 10 to 12, **characterized in that** the pump (10) and the motor (30) are capable of being fixed relative to each other in a housing (40).

14. A pump according to claim 13, **characterized in that** the housing (40) has at least one U profile with a base area (42) and two arms (44, 46), wherein the arms are deflected parallel (44, 46) to each other about the angle (α) out of their position at a right angle to the base area (42).

15. Use of a pump (10) according to any one of the preceding claims in a servicing appliance for the servicing of vehicles, in particular for the servicing of brakes, clutches and gearboxes of vehicles.

16. A pump according to any one of claims 1 to 14 with a valve (60) capable of being actuated by a fluid and with a piston (70) which is loaded by a compression spring (90) and which is guided in a displaceable manner in a hollow cylinder (80),
wherein the hollow cylinder (80) has:
- a cylindrical wall (81) with an internal diameter (d_{w}), wherein at least one outlet opening (82) is arranged in the wall (81),
- a front wall (83) which is arranged on a front face of the wall (81), wherein the front wall (83) has an inlet opening (84) with an internal diameter (dₑ) and a substantially cylindrical wall (84a), and
- wherein the inner side (83a) of the front wall (83) is designed in the manner of an external face of a frustum,
and wherein the piston (70) has:
- a first, front, substantially cylindrical area (71) with a diameter (d₁) which is smaller than the internal diameter (dₑ) of the inlet opening (84),
- a second area (72) which adjoins the first area (71), wherein the second area (72) has a non-round external contour (72a), the largest diameter (d₂) of which is smaller than the internal diameter (d_{w}) of the wall (81), wherein the transition from the first area (71) to the second area (72) is formed by a curve (74),
wherein the piston (70) is capable of being pressed with the first area (71) thereof into the inlet opening (84) in a springing manner by way of the compression spring (90).

17. A pump according to claim 16, **characterized in that** the external face (83b) of the front wall (83) has a depression (85).

18. A pump according to one of claims 16 to 17, **characterized in that** the diameter (d₁) of the first area (71) is smaller by approximately 5 % to 15 %, preferably by approximately 10 %, of its diameter (d₁) than the internal diameter (dₑ) of the inlet opening.

19. A pump according to any one of claims 16 to 18, **characterized in that** the diameter (d₁) of the first area (71) amounts to approximately 4.1 mm.

20. A pump according to any one of claims 16 to 19, **characterized in that** the internal diameter (dₑ) of the inlet opening (84) amounts to approximately 4.4 mm.

21. A pump according to any one of claims 16 to 20, **characterized in that** the second area (72) has an external contour (72a) in the manner of a polygon, in particular in the manner of a hexagon.

22. A pump according to any one of claims 16 to 21, **characterized in that** a third area (73), which is made cylindrical, adjoins the second area (72) of the piston (70).

23. A pump according to claim[s] 21 and 22, **characterized in that** the third area (73) has a diameter (d₃) which corresponds to the distance between two corners of the hexagonal contour of the second area (72).

24. A pump according to any one of claims 16 to 23, **characterized in that** the piston (70) has an axial bore (75) at least in the first area (71).

25. A pump according to any one of claims 16 to 24, **characterized in that**, starting from the second area (72), the piston (70) is designed in the form of a hollow cylinder.

## Revendications

1. Pompe (10) comportant un moteur (30), cette pompe (10) comprenant un arbre de pompe (17) entrainé par un arbre moteur (35) du moteur (30), l'arbre moteur (35) et l'arbre de pompe (17) étant écartés axialement au niveau de leurs extrémités libres (17a, 35a) et étant reliés par l'intermédiaire d'un ressort hélicoïdal (50),
**caractérisée en ce que**
les extrémités libres (17a, 35a) de l'arbre de pompe (17) et de l'arbre moteur (35) sont aplaties au moins d'un côté, et au moins la première spire (51) et la dernière spire (52) du ressort hélicoïdal (50) sont aplaties de manière correspondante.

2. Pompe (10) conforme à la revendication 1, pour refouler des liquides comportant un volume fermé (11),
**caractérisée en ce que**
le volume (11) comporte une entrée (12) et une sortie (13), une mécanique de refoulement (14) étant montée dans le volume fermé, une résistance dépendant de l'écoulement étant montée sur la sortie (13), cette résistance étant constituée par un élément de fermeture (20) sollicité par un élément élastique (21) et pouvant être dévié en fonction de l'écoulement contre la force du ressort, et l'élément de fermeture (20) étant réalisé sous la forme d'une sphère ayant un diamètre supérieur d'environ un tiers au diamètre de la sortie (13).

3. Pompe conforme à la revendication 2,
**caractérisée en ce que**
l'élément de fermeture (20) est réalisé sous la forme d'une sphère ayant un diamètre d'environ 4,5 mm.

4. Pompe conforme à la revendication 2 ou 3,
**caractérisée en ce que**
la sortie (13) a un diamètre d'environ 3 mm.

5. Pompe conforme à l'une des revendications 2 à 4,
**caractérisée en ce que**
l'élément élastique (21) est réalisé sous la forme d'un ressort hélicoïdal.

6. Pompe conforme à la revendication 5,
**caractérisée en ce que**
le ressort hélicoïdal (21) est monté dans un cylindre creux (22) comportant un épaulement interne (23) contre lequel il s'appuie.

7. Pompe conforme à la revendication 6,
**caractérisée en ce qu'**
un embout à olive (24) est monté sur le cylindre creux (22).

8. Pompe conforme à la revendication 6 ou 7,
**caractérisée en ce que**
le cylindre creux (22) comporte un filetage (25) sur sa périphérie externe.

9. Pompe conforme à l'une des revendications précédentes,
**caractérisée en ce que**
la pompe (10) est réalisée sous la forme d'une pompe volumétrique, en particulier d'une pompe à engrenages.

10. Pompe (10) conforme à l'une des revendications précédentes,
**caractérisée en ce que**
l'arbre de pompe (17) est à l'état de fonctionnement de la pompe (10) incliné d'un angle (α) par rapport à l'horizontale (h).

11. Pompe conforme à la revendication 10,
**caractérisée en ce que**
l'angle (α) est de 3° à 10°, de préférence d'environ 6°.

12. Pompe conforme à l'une des revendications 10 à 11,
**caractérisée en ce que**
l'arbre moteur (35) est monté dans le prolongement de l'arbre de pompe (17).

13. Pompe conforme à l'une des revendications 10 à 12,
**caractérisée en ce que**
la pompe (10) et le moteur (30) peuvent être fixés dans un boitier (40) l'un par rapport à l'autre,

14. Pompe conforme à la revendication 13,
**caractérisée en ce que**
le boitier (40) comporte au moins un profil en U avec une zone de base (42) et deux branches (44, 46), ces branches (44, 46) étant parallèles et inclinées de l'angle (α) par rapport à une position perpendiculaire à la zone de base (42).

15. Utilisation d'une pompe (10) conforme à l'une des revendications précédentes dans un appareil de surveillance pour la surveillance de véhicules, en particulier la surveillance de freins, d'embrayages et de boîtes de vitesses de véhicules.

16. Pompe conforme à l'une des revendications 1 à 14, comportant une soupape (60) actionnée par un fluide comprenant un piston (70) sollicité par un ressort de pression (90) et pouvant coulisser dans un cylindre creux (80),
ce cylindre creux (80) comprenant :
- une paroi cylindrique (81) ayant un diamètre interne (d_{w}), au moins une ouverture de sortie (82) étant située dans la paroi (81),
- une paroi frontale (83) située sur une face frontale de la paroi (81), la paroi frontale (83) comprenant une ouverture d'entrée (84) ayant un diamètre externe (dₑ) et une paroi essentiellement cylindrique (84a),
- la face interne (83a) de la paroi frontale (83) étant réalisée sous la forme de la surface externe d'un tronc de cône, et
- le piston (70) comprenant :
- une première zone avant (71) essentiellement cylindrique ayant un diamètre (dᵢ) inférieur au diamètre interne (dₑ) de l'ouverture d'entrée (84),
- une seconde zone (72) qui se raccorde à la première zone (71), cette seconde zone (72) ayant un contour externe non circulaire (72a) dont le plus grand diamètre (d₂) est inférieur au diamètre interne (d_{w}) de la paroi (81), la transition de la première zone (71) à la seconde zone (72) étant formée par une courbure (74),
- le piston (70) pouvant être poussé élastiquement dans l'ouverture d'entrée (84) par le ressort de pression (90), avec sa première zone (71).

17. Pompe conforme à la revendication 16,
**caractérisée en ce que**
la surface externe (83b) de la paroi frontale (83) comporte un évidement (85).

18. Pompe conforme à l'une des revendications 16 à 17,
**caractérisée en ce que**
le diamètre (d₁) de la première zone (71) est inférieur d'environ 5 à 15 % de préférence d'environ 10 % au diamètre interne (dₑ) de l'ouverture d'entrée.

19. Pompe conforme à l'une des revendications 16 à 18,
**caractérisée en ce que**
le diamètre (d₁) de la première zone (71) est d'environ 4,1 mm.

20. Pompe conforme à l'une des revendications 16 à 19,
**caractérisée en ce que**
le diamètre interne (dₑ) de l'ouverture d'entrée (84) est d'environ 4,4 mm.

21. Pompe conforme à l'une des revendications 16 à 20,
**caractérisée en ce que**
la seconde zone (72) a un contour externe (72a) polygonal, en particulier hexagonal.

22. Pompe conforme à l'une des revendications 16 à 21,
**caractérisée en ce qu'**
à la seconde zone (72) du piston (70) se raccorde une troisième zone (73) qui est cylindrique.

23. Pompe conforme aux revendications 21 et 22,
**caractérisée en ce que**
la troisième zone (73) a un diamètre (d₃) qui correspond à la distance entre deux arêtes du contour hexagonal de la seconde zone (72).

24. Pompe conforme à l'une des revendications 16 à 23,
**caractérisée en ce que**
le piston (70) comporte un perçage axial (75) au moins dans la première zone (71).

25. Pompe conforme à l'une des revendications 16 à 24,
**caractérisée en ce que**
le piston (70) est réalisé à partir de la seconde zone (72) sous la forme d'un cylindre creux.
